# EUROPEAN PATENT APPLICATION

(11) **EP 4 561 161 A1**
(43) Date of publication of application: **28.05.2025**
(21) Application number: 23845475.5
(22) Date of filing: 24.07.2023
(51) Int. Cl.: H04W 24/10

(54) **MEASUREMENT RESULT REPORTING METHOD AND APPARATUS, TERMINAL, NETWORK SIDE DEVICE, AND MEDIUM**

(30) Priority: 29.07.2022 CN 202210912361; 03.11.2022 CN 202211372359
(71) Applicant: Vivo Mobile Communication Co., Ltd., Dongguan, Guangdong 523863 (CN)
(72) Inventor: PU, Wenjuan, Dongguan, Guangdong 523863 (CN); YANG, Xiaodong, Dongguan, Guangdong 523863 (CN)
(74) Representative: Shieldmark
(86) International application number: PCT/CN2023/108786
(87) International publication number: WO 2024/022265

(57) **Abstract**

This application pertains to the field of communication technologies, and discloses a measurement result reporting method and apparatus, a terminal, a network-side device, and a medium. The measurement result reporting method in embodiments of this application includes: triggering, by a terminal, reporting of a measurement result in a case that a first condition is met, where the first condition includes at least one of the following: an altitude condition, a transmission beam condition, a measurement result variation condition, a terminal altitude variation condition, a terminal location variation condition, a terminal speed condition, a condition on the number of target objects with measurement results greater than or equal to a preset first quality threshold, and a received signal strength indicator RSSI measurement result being greater than or equal to a first RSSI threshold.

## Description

### CROSS-REFERENCE TO RELATED APPLICATIONS

This application claims priority to Chinese Patent Application No. 202210912361.8, filed with the China National Intellectual Property Administration on July 29, 2022, and entitled "MEASUREMENT RESULT REPORTING METHOD AND APPARATUS, TERMINAL, NETWORK-SIDE DEVICE, AND MEDIUM", and Chinese Patent Application No. 202211372359.2, filed with the China National Intellectual Property Administration on November 3, 2022, and entitled "MEASUREMENT RESULT REPORTING METHOD AND APPARATUS, TERMINAL, NETWORK-SIDE DEVICE, AND MEDIUM", both of which are incorporated herein by reference in their entireties.

### TECHNICAL FIELD

This application pertains to the field of communication technologies, and specifically relates to a measurement result reporting method and apparatus, a terminal, a network-side device, and a medium.

### BACKGROUND

In a communication system, a terminal may measure a channel or interference, and then report a measurement result to a network-side device, and the network-side device may perform operations such as interference avoidance and terminal scheduling based on the measurement result.

An unmanned aerial vehicle (Unmanned Aerial Vehicle, UAV), which may also be referred to as a drone, an unmanned combat aircraft, a swarm aircraft, or the like, is a type of terminal and broadly refers to various remotely controlled aircraft that do not require a pilot to operate. A flight altitude of the unmanned aerial vehicle is high. Compared with a ground terminal, the unmanned aerial vehicle has more line-of-sight (Line of Sight, LoS) paths and is subject to severer downlink interference. In many cases, measurement results of the unmanned aerial vehicle are not reported in time, which easily affects performance of a communication system.

### SUMMARY

Embodiments of this application provide a measurement result reporting method and apparatus, a terminal, a network-side device, and a medium to trigger timely reporting of a measurement result and improve performance of a communication system.

According to a first aspect, a measurement result reporting method is provided and includes:
triggering, by a terminal, reporting of a measurement result in a case that a first condition is met, where
the first condition includes at least one of the following:
   an altitude of the terminal meets a preset altitude condition;
   a transmission beam meets a preset beam requirement;
   a measurement result variation is greater than or equal to a preset first variation threshold;
   an altitude variation of the terminal is greater than or equal to a preset second variation threshold;
   a location variation of the terminal is greater than or equal to a preset third variation threshold;
   a speed of the terminal is greater than or equal to a preset speed threshold;
   the number of target objects with measurement results greater than or equal to a preset first quality threshold is greater than or equal to the maximum number of target objects; and
   a received signal strength indicator RSSI measurement result is greater than or equal to a first RSSI threshold.

According to a second aspect, a measurement result reporting apparatus is provided and includes:
a trigger module, configured to trigger reporting of a measurement result in a case that a first condition is met, where
the first condition includes at least one of the following:
   an altitude of a terminal meets a preset altitude condition; a transmission beam meets a preset beam requirement; a measurement result variation is greater than or equal to a preset first variation threshold; an altitude variation of the terminal is greater than or equal to a preset second variation threshold; a location variation of the terminal is greater than or equal to a preset third variation threshold; a speed of the terminal is greater than or equal to a preset speed threshold; the number of target objects with measurement results greater than or equal to a preset first quality threshold is greater than or equal to the maximum number of target objects; and a received signal strength indicator RSSI measurement result is greater than or equal to a first RSSI threshold.

According to a third aspect, a measurement result reporting method is provided and includes:
receiving, by a network-side device, a measurement result reported by a terminal, where reporting of the reported measurement result is triggered in a case that a first condition is met, where
the first condition includes at least one of the following:
   an altitude of the terminal meets a preset altitude condition; a transmission beam meets a preset beam requirement; a measurement result variation is greater than or equal to a preset first variation threshold; an altitude variation of the terminal is greater than or equal to a preset second variation threshold; a location variation of the terminal is greater than or equal to a preset third variation threshold; a speed of the terminal is greater than or equal to a preset speed threshold; the number of target objects with measurement results greater than or equal to a preset first quality threshold is greater than or equal to the maximum number of target objects; and a received signal strength indicator RSSI measurement result is greater than or equal to a first RSSI threshold.

According to a fourth aspect, a measurement result reporting apparatus is provided and includes:
a second receiving module, configured to receive a measurement result reported by a terminal, where reporting of the reported measurement result is triggered in a case that a first condition is met, where
the first condition includes at least one of the following:
   an altitude of the terminal meets a preset altitude condition; a transmission beam meets a preset beam requirement; a measurement result variation is greater than or equal to a preset first variation threshold; an altitude variation of the terminal is greater than or equal to a preset second variation threshold; a location variation of the terminal is greater than or equal to a preset third variation threshold; a speed of the terminal is greater than or equal to a preset speed threshold; the number of target objects with measurement results greater than or equal to a preset first quality threshold is greater than or equal to the maximum number of target objects; and a received signal strength indicator RSSI measurement result is greater than or equal to a first RSSI threshold.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a network-side device is provided. The network-side device includes a processor and a memory. The memory stores a program or instructions capable of running on the processor. When the program or instructions are executed by the processor, the steps of the method according to the third aspect are implemented.

According to a seventh aspect, a communication system is provided and includes a terminal and a network-side device. The terminal may be configured to perform the steps of the method according to the first aspect. The network-side device may be configured to perform the steps of the method according to the third aspect.

According to an eighth aspect, a readable storage medium is provided. The readable storage medium stores a program or instructions. When the program or instructions are executed by a processor, the steps of the method according to the first aspect are implemented, or the steps of the method according to the third aspect are implemented.

According to a ninth aspect, a computer program or program product is provided. The computer program or program product is stored in a storage medium. The computer program or program product is executed by at least one processor to implement the steps of the method according to the first aspect or implement the steps of the method according to the third aspect.

In the embodiments of this application, the terminal triggers reporting of the measurement result in the case that the first condition is met, where the first condition may be at least one of the following: the altitude of the terminal meets the preset altitude condition; the transmission beam meets the preset beam requirement; the measurement result variation is greater than or equal to the preset first variation threshold; the altitude variation of the terminal is greater than or equal to the preset second variation threshold; the location variation of the terminal is greater than or equal to the preset third variation threshold; the speed of the terminal is greater than or equal to the preset speed threshold; the number of target objects with measurement results greater than or equal to the preset first quality threshold is greater than or equal to the maximum number of target objects; and the RSSI measurement result is greater than or equal to the first RSSI threshold. In other words, when any one of the foregoing conditions is met, reporting of the measurement result may be triggered to report the measurement result to the network-side device in time, so that the network-side device can perform corresponding interference avoidance or take a corresponding remedial action based on the measurement result reported by the terminal to improve performance of the communication system.

### BRIEF DESCRIPTION OF DRAWINGS

FIG. 1 is a block diagram of a wireless communication system to which an embodiment of this application may be applied;
FIG. 2 is an implementation flowchart of a measurement result reporting method according to an embodiment of this application;
FIG. 3 is a schematic diagram of a process of triggering measurement result reporting according to an embodiment of this application;
FIG. 4 is a schematic diagram of a structure of a measurement result reporting apparatus corresponding to FIG. 2 according to an embodiment of this application;
FIG. 5 is an implementation flowchart of another measurement result reporting method according to an embodiment of this application;
FIG. 6 is a schematic diagram of a structure of a measurement result reporting apparatus corresponding to FIG. 5 according to an embodiment of this application;
FIG. 7 is a schematic diagram of a structure of a communication device according to an embodiment of this application;
FIG. 8 is a schematic diagram of a structure of a terminal according to an embodiment of this application; and
FIG. 9 is a schematic diagram of a structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

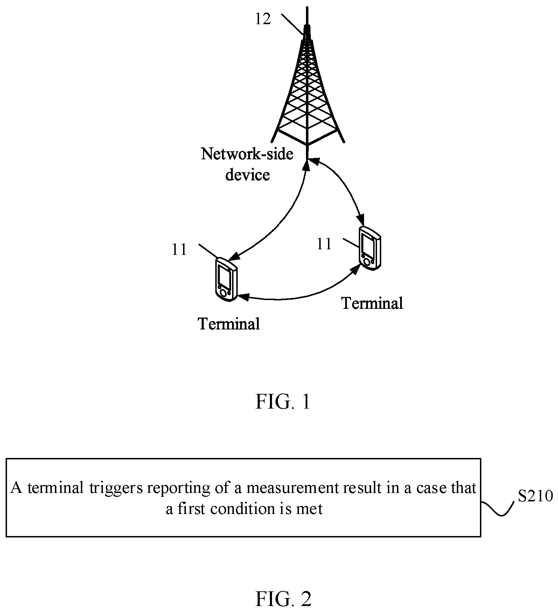

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), an unmanned aerial vehicle (UAV), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

A measurement result reporting method provided in the embodiments of this application is hereinafter described in detail by using some embodiments and application scenarios thereof with reference to the accompanying drawings.

FIG. 2 is an implementation flowchart of a measurement result reporting method according to an embodiment of this application. The method may include the following step.

S210. A terminal triggers reporting of a measurement result in a case that a first condition is met, where
the first condition includes at least one of the following:
an altitude of the terminal meets a preset altitude condition; a transmission beam meets a preset beam requirement; a measurement result variation is greater than or equal to a preset first variation threshold; an altitude variation of the terminal is greater than or equal to a preset second variation threshold; a location variation of the terminal is greater than or equal to a preset third variation threshold; a speed of the terminal is greater than or equal to a preset speed threshold; the number of target objects with measurement results greater than or equal to a preset first quality threshold is greater than or equal to the maximum number of target objects; and a received signal strength indicator RSSI measurement result is greater than or equal to a first RSSI threshold.

In this embodiment of this application, the terminal may be the terminal 11 shown in FIG. 1. In a case that the terminal receives a measurement configuration of a network-side device, the terminal may measure a channel or interference, such as an intra-frequency neighboring cell and a similar frequency, to detect interference existing in the terminal. In the case that the first condition is met, reporting of the measurement result may be triggered. Based on the measurement result reported by the terminal, the network side can perform corresponding interference avoidance or interference resolution. The measurement result may include reference signal received power (Reference Signal Receiving Power, RSRP), reference signal received quality (Reference Signal Receiving Quality, RSRQ), a signal to interference plus noise ratio (Signal to Interference plus Noise Ratio, SINR), a received signal strength indicator (Received Signal Strength Indicator, RSSI), or the like. The measurement result may be a measurement result corresponding to a synchronization signal block (Synchronization Signal Block, SSB) or a measurement result corresponding to a channel state information-reference signal (Channel State Information-Reference Signal, CSI-RS). The measurement result may be at a cell level or a beam level.

The terminal may trigger reporting of the measurement result in the case that the first condition is met, to report the measurement result in time and improve performance of a communication system.

The following describes the first condition in detail. The first condition may include at least one of the following:
(1) The transmission beam meets the preset beam requirement. In other words, the terminal may trigger reporting of the measurement result in a case that the transmission beam meets the preset beam requirement.

The transmission beam may include at least one of a downlink receive beam of the terminal, an uplink transmit beam of the terminal, a downlink transmit beam of the network-side device, and an uplink receive beam of the network-side device. The beam requirement may be configured by the network-side device or specified by a protocol.

In an NR system, terminals can use beams. If a terminal uses a beam, the terminal generates strong interference to neighboring cells in a same direction as the current beam and suffers interference from the neighboring cells in the same direction as the current beam. If the terminal generates strong interference on a plurality of beams, it indicates that the terminal suffers severe interference. Therefore, a beam requirement can be preset, and when the transmission beam meets the preset beam requirement, the terminal can trigger reporting of the measurement result.

(2) The measurement result variation is greater than or equal to the preset first variation threshold.

In an implementation, the terminal measures a channel or interference, and if the measurement result variation is greater than or equal to the preset first variation threshold, reporting of the measurement result may be triggered. The first variation threshold may be configured by the network-side device or specified by a protocol.

When the measurement result variation is greater than or equal to the first variation threshold, it may be considered that the current channel or interference changes greatly, and reporting of the measurement result may be triggered to report the measurement result to the network-side device in time.

In another optional implementation, the measurement result variation includes at least one of the following:
a signal quality variation; a variation of the number of target objects with measurement results greater than or equal to the first quality threshold; and a variation of the number of cells that meet an entering condition corresponding to a measurement event and/or a leaving condition corresponding to a measurement event.

It should be noted that the measurement result variation relates to measurement results under the same measurement configuration and reporting configuration.

In an implementation, if the signal quality variation is greater than or equal to the preset first variation threshold, reporting of the measurement result may be triggered.

In an implementation, if the variation of the number of target objects with measurement results greater than or equal to the first quality threshold is greater than or equal to the preset first variation threshold, reporting of the measurement result may be triggered. For example, at a time t1, measurement results of s1 cells are greater than or equal to the first quality threshold; at a time t2, measurement results of s2 cells are greater than or equal to the first quality threshold; from the time t1 to the time t2, the variation of the number of target objects with measurement results greater than or equal to the first quality threshold is s2-s1; and if s2-s1 is greater than or equal to the first variation threshold, reporting of the measurement result is triggered. In an optional implementation, the variation of the number of target objects with measurement results greater than or equal to the first quality threshold may be recorded by a variable V. If a value of V is greater than or equal to the first variation threshold, reporting of the measurement result is triggered.

In an implementation, if the variation of the number of cells that meet the entering condition corresponding to the measurement event and/or the leaving condition corresponding to the measurement event is greater than or equal to the preset first variation threshold, reporting of the measurement result may be triggered. For example, the variation of the number of cells that meet the entering condition corresponding to the measurement event and/or the leaving condition corresponding to the measurement event may be indicated or recorded by using a first variable, and if a value of the first variable is greater than or equal to the first variation threshold, reporting of the measurement result may be triggered.

Optionally, if N new cells meet the entering condition (Entering condition) of the measurement event, N is added to the value of the first variable; and if M old cells meet the leaving condition (Leaving condition) of the measurement event, M is added to the value of the first variable, where N is a natural number, and M is a natural number. It may be understood that the terminal adjusts the value of the first variable based on the number of cells meeting the entering condition corresponding to the measurement event or the leaving condition corresponding to the measurement event. For example, if two cells meet the entering condition corresponding to the measurement event, 2 is added to the value of the first variable.

In an optional implementation, the number of cells that meet the entering condition corresponding to the measurement event and/or the leaving condition corresponding to the measurement event includes at least one of the following:
the number of cells that meet the leaving condition corresponding to the measurement event;
the number of cells that meet the entering condition corresponding to the measurement event; and
the number of cells that meet the leaving condition corresponding to the measurement event and that have been reported to the network side.

In one case, N newly added cells meet the entering condition corresponding to the measurement event, but measurement reporting is not triggered. In a short period of time, the N cells successively meet the leaving condition and are to be removed, and 2N will be recorded by the first variable. In this case, measurement reporting may be triggered because the first variation threshold is reached, but this variation is meaningless to the network side. To resolve this technical problem, optionally, if M cells meet the leaving condition corresponding to the measurement event and the M cells have not been reported to the network side, 2M is subtracted from the value of the first variable, or M is subtracted from the value of the first variable. This can avoid reporting of the measurement result caused by a meaningless variation. It should be noted that subtracting 2M from the value of the first variable or subtracting M from the value of the first variable means subtracting 2M from the value of the first variable before the condition "M cells meet the leaving condition corresponding to the measurement event and the M cells have not been reported to the network side" is met. For example, an original value of the first variable is Q. If N cells meet the entering condition corresponding to the measurement event, the value of the first variable is updated to Q+N, and if M cells of the N cells meet the leaving condition corresponding to the measurement event, the value of the first condition is updated to (Q+N)+M. If the M cells have not been reported to the network side, the value of the first variable is updated to (Q+N+M)2M, or the value of the first variable is updated to (Q+N+M)-M. It should be noted that Q may be 0 or other numerical values, and is not specifically limited in this embodiment.

In an implementation, in a case that the value of the first variable is greater than or equal to the first variation threshold, reporting of the measurement result is triggered, and the value of the first variable is set to 0. Optionally, in a case that the value of the first variable is greater than or equal to the first variation threshold, reporting of the measurement result may be first triggered, and then the value of the first variable is set to 0; or in a case that the value of the first variable is greater than or equal to the first variation threshold, the value of the first variable is directly set to 0, and then reporting of the measurement result is triggered. This is not specifically limited in this embodiment.

Optionally, a new cell is a cell that meets the entering condition corresponding to the measurement event, that is, a cell that will be added to cellTriggeredList or a cell whose measurement result has not been reported to the network side. An old cell is a cell that meets the leaving condition corresponding to the measurement event and will be removed from cellTriggeredList.

It should be noted that cellTriggeredList is used to record information of a cell that meets the entering condition corresponding to the measurement event.

In addition, that a cell meets the leaving condition corresponding to the measurement event indicates that the cell meets the leaving condition (Leaving condition) corresponding to the configured measurement event, and that a cell meets the entering condition corresponding to the measurement event indicates that the cell meets the entering condition (Entering condition) corresponding to the configured measurement event. A leaving condition or entering condition corresponding to a measurement event belongs to the prior art. Details are not described herein again in this application.

(3) The altitude variation of the terminal is greater than or equal to the preset second variation threshold. In other words, when the altitude variation of the terminal is greater than or equal to the preset second variation threshold, reporting of the measurement result may be triggered. The second variation threshold may be configured by the network-side device or specified by a protocol.

When the terminal is in an ascending state, the altitude increases constantly, and received interference may also increase rapidly, or when the terminal is in a descending state, the altitude decreases constantly, and received interference may also decrease. When the altitude variation of the terminal is greater than or equal to the second variation threshold, it may be considered that the current channel or interference changes greatly, and reporting of the measurement result may be triggered.

(4) The location variation of the terminal is greater than or equal to the preset third variation threshold. In other words, when the location variation of the terminal is greater than or equal to the preset third variation threshold, reporting of the measurement result may be triggered. The third variation threshold may be configured by the network-side device or specified by a protocol.

The terminal may determine its location by using a positioning system or in a sidelink positioning manner. When the location variation of the terminal is greater than or equal to the third variation threshold, it may be considered that the channel or interference changes greatly, and reporting of the measurement result may be triggered to report the measurement result to the network-side device in time.

(5) The speed of the terminal is greater than or equal to the preset speed threshold. In other words, when the speed of the terminal is greater than or equal to the preset speed threshold, reporting of the measurement result is triggered. The speed threshold may be configured by the network-side device or specified by a protocol.

The speed of the terminal may include a vertical speed and/or a horizontal speed of the terminal. When the speed of the terminal is high, the channel or interference may also change greatly. Therefore, when the speed of the terminal is greater than or equal to the speed threshold, reporting of the measurement result may be triggered to report the measurement result to the network-side device in time.

(6) The number of target objects with measurement results greater than or equal to the preset first quality threshold is greater than or equal to the maximum number of target objects. In other words, when the number of target objects with measurement results greater than or equal to the preset first quality threshold is greater than or equal to the maximum number of target objects, reporting of the measurement result is triggered. The first quality threshold may be configured by the network-side device or specified by a protocol.

The maximum number of target objects may be related to a first specific altitude.

The first specific altitude may be configured by the network-side device or specified by a protocol. The maximum number of target objects is related to the first specific altitude, and may be valid when the terminal reaches the first specific altitude. In other words, when the terminal reaches the first specific altitude, the corresponding maximum number of target objects is determined, and further, whether to trigger reporting of the measurement result is determined based on whether the number of target objects with measurement results greater than or equal to the first quality threshold is greater than or equal to the maximum number of target objects.

There may be a plurality of target objects, and each target object may correspond to a measurement result. The measurement result of each target object may be monitored. When the number of target objects with measurement results greater than or equal to the first quality threshold is large, for example, greater than or equal to the maximum number of target objects, it may be considered that reporting of the current measurement result is of great significance and reporting of the measurement result may be triggered.

The target object may include at least one of a cell, a beam, and a reference signal. To be specific, when the number of cells with measurement results greater than or equal to the preset first quality threshold is greater than or equal to the maximum number of cells (numberOfTriggeringCells), the terminal may trigger reporting of the measurement result; and/or when the number of beams with measurement results greater than or equal to the preset first quality threshold is greater than or equal to the maximum number of beams (numberOfTriggeringBeams), the terminal may trigger reporting of the measurement result; and/or when the number of reference signals with measurement results greater than or equal to the preset first quality threshold is greater than or equal to the maximum number of reference signals (numberOfTriggeringRSs), the terminal may trigger reporting of the measurement result. The maximum number of target objects corresponding to different types of target objects may be the same or different.

Specifically, that the number of target objects with measurement results greater than or equal to the preset first quality threshold is greater than or equal to the maximum number of target objects includes at least one of the following:
the number of target objects with RSSI measurement results greater than or equal to the preset first quality threshold is greater than or equal to the maximum number of target objects; and
the number of target objects with beam measurement results greater than or equal to the preset first quality threshold is greater than or equal to the maximum number of target objects.

The RSSI measurement result and the beam measurement result may correspond to respective first quality thresholds. In other words, when the number of target objects with RSSI measurement results greater than or equal to the corresponding first quality threshold is greater than or equal to the maximum number of target objects, the terminal may trigger reporting of the measurement result; and/or when the number of target objects with beam measurement results greater than or equal to the corresponding first quality threshold is greater than or equal to the maximum number of target objects, the terminal may trigger reporting of the measurement result.

The RSSI measurement result may include an RSSI measurement result of each transmission beam, to improve accuracy of the RSSI measurement result.

(7) The received signal strength indicator RSSI measurement result is greater than or equal to the first RSSI threshold. In other words, when the RSSI measurement result is greater than or equal to the first RSSI threshold, the terminal triggers reporting of the measurement result. The first RSSI threshold may be configured by the network-side device or specified by a protocol. When the RSSI measurement result is greater than or equal to the first RSSI threshold, it may be considered that current received signal strength is high and that received interference may be large. In this case, reporting of the measurement result is triggered, and the measurement result may be reported to the network-side device in time.

In this embodiment of this application, the terminal may perform RSSI measurement based on a configured RSSI measurement timing configuration (RSSI Measurement Timing Configuration, RMTC). The RSSI measurement result may include an RSSI measurement result of each transmission beam.

(8) The altitude of the terminal meets the preset altitude condition. In other words, when the altitude of the terminal meets the preset altitude condition, the terminal may trigger reporting of the measurement result.

That the altitude of the terminal meets the preset altitude condition may include that the altitude of the terminal is greater than or equal to a preset first altitude threshold, and/or that the altitude of the terminal is less than or equal to a preset second altitude threshold.

It should be noted that each quality threshold in this embodiment of this application may be a cell-level threshold or a beam-level threshold.

The preset quality threshold may be specified by a protocol or configured by the network side. For example, the network side may configure the quality threshold in reporting configuration information. The quality threshold may be a cell-level threshold or a beam-level threshold. Each quality threshold may be an SSB quality threshold, a CSI-RS quality threshold, an RSSI quality threshold, or the like.

By using the method provided in this embodiment of this application, the terminal triggers reporting of the measurement result in the case that the first condition is met, where the first condition may be at least one of the following: the altitude of the terminal meets the preset altitude condition; the transmission beam meets the preset beam requirement; the measurement result variation is greater than or equal to the preset first variation threshold; the altitude variation of the terminal is greater than or equal to the preset second variation threshold; the location variation of the terminal is greater than or equal to the preset third variation threshold; the speed of the terminal is greater than or equal to the preset speed threshold; the number of target objects with measurement results greater than or equal to the preset first quality threshold is greater than or equal to the maximum number of target objects; and the RSSI measurement result is greater than or equal to the first RSSI threshold. In other words, when any one of the foregoing conditions is met, reporting of the measurement result may be triggered to report the measurement result to the network-side device in time, so that the network-side device can perform corresponding interference avoidance or take a corresponding remedial action based on the measurement result reported by the terminal to improve performance of a communication system.

It should be noted that the terminal triggers reporting of the measurement result in the case that the first condition is met. In addition, the terminal may also report the measurement result based on a reporting interval and reporting times configured by the network-side device in the related art.

In an embodiment of this application, that the transmission beam meets the preset beam requirement includes: when the altitude of the terminal is within a preset altitude range, the transmission beam meets the preset beam requirement; and/or
that the measurement result variation is greater than or equal to the preset first variation threshold includes: when the altitude of the terminal is within a preset altitude range, the measurement result variation is greater than or equal to the preset first variation threshold; and/or
that the altitude variation of the terminal is greater than or equal to the preset second variation threshold includes: when the altitude of the terminal is within a preset altitude range, the altitude variation of the terminal is greater than or equal to the preset second variation threshold; and/or
that the location variation of the terminal is greater than or equal to the preset third variation threshold includes: when the altitude of the terminal is within a preset altitude range, the location variation of the terminal is greater than or equal to the preset third variation threshold; and/or
that the speed of the terminal is greater than or equal to the preset speed threshold includes: when the altitude of the terminal is within a preset altitude range, the speed of the terminal is greater than or equal to the preset speed threshold; and/or
that the received signal strength indicator RSSI measurement result is greater than or equal to the first RSSI threshold includes: when the altitude of the terminal is within a preset altitude range, the RSSI measurement result is greater than or equal to the first RSSI threshold.

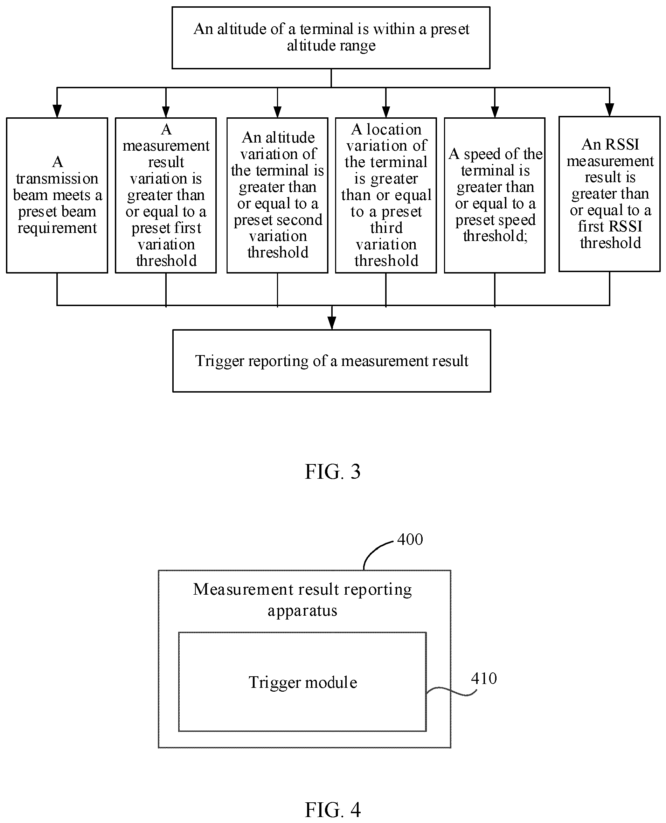

It may be understood that when the altitude of the terminal is within the preset altitude range, the terminal suffers more interference. Therefore, in this embodiment of this application, as shown in FIG. 3, when the altitude of the terminal is within the preset altitude range, if the terminal meets at least one of the following: the transmission beam meets the preset beam requirement; the measurement result variation is greater than or equal to the preset first variation threshold; the altitude variation of the terminal is greater than or equal to the preset second variation threshold; the location variation of the terminal is greater than or equal to the preset third variation threshold; the speed of the terminal is greater than or equal to the preset speed threshold; and the RSSI measurement result is greater than or equal to the first RSSI threshold, the terminal may trigger reporting of the measurement result to report the measurement result to the network-side device in time, so that the network-side device can perform corresponding interference avoidance or take a corresponding remedial action based on the measurement result reported by the terminal to improve performance of the communication system.

In an embodiment of this application, that the transmission beam meets the preset beam requirement may include at least one of the following:
a beam identifier of the transmission beam is a preset identifier; a beam angle of the transmission beam is a preset angle value or within a preset angle range; a variation of the beam angle of the transmission beam is greater than or equal to a preset fourth variation threshold; quality of the transmission beam is less than or equal to a preset second quality threshold; and an interference measurement result of the transmission beam is greater than or equal to a preset third quality threshold.

In this embodiment of this application, the terminal triggers reporting of the measurement result when the first condition is met, where the first condition may include that the transmission beam meets the preset beam requirement. As described above, the transmission beam may include at least one of the downlink receive beam of the terminal, the uplink transmit beam of the terminal, the downlink transmit beam of the network-side device, and the uplink receive beam of the network-side device. The beam requirement may include at least one of the above-mentioned requirements.

Specifically, that the transmission beam meets the preset beam requirement may include that the beam identifier of the transmission beam is the preset identifier, that is, when the beam identifier of the transmission beam is the preset identifier, it is considered that the transmission beam meets the preset beam requirement, and the terminal may trigger reporting of the measurement result.

That the transmission beam meets the preset beam requirement may further include that the beam angle of the transmission beam is the preset angle value or within the preset angle range. The network-side device may configure an angle value or an angle range. When a beam angle of the uplink transmit beam of the terminal is the angle value or within the angle range, it is considered that the transmission beam meets the preset beam requirement, and the terminal may trigger reporting of the measurement result. The beam angle of the transmission beam may be determined indirectly based on a moving direction of the terminal and a direction of the beam, or may be determined based on an absolute value of the beam angle.

That the transmission beam meets the preset beam requirement may further include that the transmission beam changes. When the transmission beam changes, it may be considered that the transmission beam meets the preset beam requirement, and the terminal may trigger reporting of the measurement result.

That the transmission beam meets the preset beam requirement may further include that the variation of the beam angle of the transmission beam is greater than or equal to the preset fourth variation threshold. During communication between the terminal and the network-side device, the beam angle of the transmission beam may change. When the variation of the beam angle of the transmission beam is greater than or equal to the preset fourth variation threshold, it may be considered that the transmission beam meets the preset beam requirement, and the terminal may trigger reporting of the measurement result. The fourth variation threshold may be configured by the network-side device or specified by a protocol.

That the transmission beam meets the preset beam requirement may further include that the quality of the transmission beam is less than or equal to the preset second quality threshold. The second quality threshold may be configured by the network-side device or specified by a protocol. When the quality of the transmission beam is less than or equal to the preset second quality threshold, it may be considered that the transmission beam meets the preset beam requirement, and the terminal may trigger reporting of the measurement result.

That the transmission beam meets the preset beam requirement may further include that the interference measurement result of the transmission beam is greater than or equal to the preset third quality threshold. The third quality threshold may be configured by the network-side device or specified by a protocol. When the interference measurement result of the transmission beam is greater than or equal to the third quality threshold, it may be considered that the current interference is large and that the transmission beam meets the preset beam requirement, and the terminal may trigger reporting of the measurement result.

The beam requirement includes at least one of the foregoing requirements. When the transmission beam meets the beam requirement, reporting of the measurement result may be triggered to report the measurement result to the network-side device in time.

In an embodiment of this application, the method may further include the following steps:
the terminal is configured with one or more maximum numbers of target objects, where each maximum number of target objects corresponds to one specific altitude or altitude range or altitude level; and/or
the terminal is configured with one first reference value and a plurality of first offsets, where each first offset corresponds to one specific altitude or altitude range or altitude level, and each maximum number of target objects is obtained based on the first reference value and one of the plurality of first offsets; and/or
the terminal is configured with one second reference value and one fixed second offset, where the second offset corresponds to a fixed altitude variation, and each maximum number of target objects is obtained based on the second reference value and the second offset.

It may be understood that, in an ascending process of the terminal, when the number of target objects with measurement results greater than or equal to the preset first quality threshold is greater than or equal to the maximum number of target objects, reporting of the measurement result is triggered. Afterward, the altitude of the terminal may continue to increase, and the terminal detects more interfering cells, reference signals, beams, and the like. In other words, the number of target objects meeting a corresponding condition increases. If the terminal can only report the measurement result periodically, a problem of untimely reporting of the measurement result occurs.

Therefore, in this embodiment of this application, the maximum number of target objects (numberOfTriggeringCells/numberOfTriggeringBeams/numberOfTriggeringRSs) can be adjusted based on the altitude of the terminal, so that the terminal can trigger reporting of the measurement result in time in a case that new interference is detected.

Specifically, the network-side device may configure one or more maximum numbers of target objects for the terminal, where each maximum number of target objects corresponds to one specific altitude or altitude range or altitude level. For example, two maximum numbers of target objects are configured for the terminal, and are maximum number A of target objects and maximum number B of target objects respectively. A specific altitude corresponding to maximum number A of target objects is altitude A, and a specific altitude corresponding to maximum number B of target objects is altitude B. When the altitude of the terminal reaches altitude A, maximum number A of target objects takes effect. When the altitude of the terminal reaches altitude B, maximum number B of target objects takes effect. The same applies when each maximum number of target objects corresponds to an altitude range or altitude level. Details are not described herein again.

The network-side device may further configure one first reference value and a plurality of first offsets for the terminal, where each first offset corresponds to one specific altitude or altitude range or altitude level, and each maximum number of target objects is obtained based on the first reference value and one of the plurality of first offsets. For example, the first reference value configured for the terminal is X, and the plurality of first offsets are X1 and X2 respectively, where a specific altitude corresponding to first offset X1 is altitude B1, and a specific altitude corresponding to first offset X2 is altitude B2. When the altitude of the terminal reaches B1, the maximum number of target objects may be the first reference value X + first offset X1. When the altitude of the terminal reaches B2, the maximum number of target objects may be the first reference value X + first offset X2. The same applies when each first offset corresponds to an altitude range or altitude level. Details are not described herein again.

The network-side device may further configure one second reference value and one fixed second offset for the terminal, where the second offset corresponds to a fixed altitude variation. For example, the second reference value configured for the terminal is Y, and the second offset is Y1, where the fixed altitude variation corresponding to the second offset is C. When the altitude of the terminal reaches a specified threshold, the maximum number of target objects may be the second reference value Y. When the altitude variation of the terminal reaches C, the maximum number of target objects may be the second reference value Y + second offset Y1. When the altitude variation of the terminal reaches C again, the maximum number of target objects may be the second reference value Y + 2*second offset Y1. The increase continues in this way. Details are not described herein again.

The first offset and the second offset may be positive or negative.

The foregoing manner helps the terminal accurately adjust the maximum number of target objects, to trigger reporting of the measurement result in time when the corresponding first condition is met.

In an embodiment of this application, if the first condition for triggering reporting of the measurement result includes that the transmission beam meets the preset beam requirement, the reported measurement result includes transmission beam information.

In this embodiment of this application, the terminal may trigger reporting of the measurement result in the case that the first condition is met. If the first condition for triggering reporting of the measurement result includes that the transmission beam meets the preset beam requirement, the reported measurement result may include the transmission beam information. The transmission beam information may include an identifier of the transmission beam and/or an angle of the transmission beam. The reported measurement result includes the transmission beam information, which is convenient for the network-side device to adjust the beam based on the transmission beam information.

In an embodiment of this application, that the terminal triggers reporting of the measurement result in the case that the first condition is met may include the following step:
The terminal reports a target measurement result to the network-side device in the case that the first condition is met, where
the target measurement result may include: a measurement result meeting a second condition; and/or altitude information of the terminal; and/or location information of the terminal; and/or transmission beam information.

In the related art, when reporting the measurement result, the terminal reports all measurement results to the network-side device, where the measurement results may include some unnecessary measurement results. This causes high signaling overheads for reporting the measurement results.

Therefore, in this embodiment of this application, in the case that the first condition is met, the terminal can first determine the target measurement result to be reported, and then report the target measurement result to the network-side device. In other words, the terminal first screens the measurement results to select the current target measurement result of reporting significance, and then reports the target measurement result to the network-side device. This can avoid reporting all the measurement results to the network-side device every time a measurement result is reported, and can reduce signaling overheads for reporting the measurement results.

The target measurement result may include the measurement result meeting the second condition. The second condition may be configured by the network-side device or specified by a protocol.

The measurement result meeting the second condition may include a measurement result with quality greater than or equal to a preset fourth quality threshold. It may be considered that reporting of the measurement result with quality greater than or equal to the preset fourth quality threshold is of great significance. Therefore, when the terminal triggers reporting of the measurement result in the case that the first condition is met, the terminal can select the measurement result with quality greater than or equal to the preset fourth quality threshold, and report the measurement result selected as the target measurement result to the network-side device. The fourth quality threshold may be a cell-level threshold or a beam-level threshold.

The measurement result meeting the second condition may further include a measurement result of a specific cell. Before the terminal triggers reporting of the measurement result in the case that the first condition is met, the terminal may receive configuration information, where one or more specific cells may be configured in the configuration information, and the specific cell may be a cell to which the terminal generates more interference. If the terminal uses a beam, the terminal may generate strong interference to only neighboring cells in a same direction as the current beam and suffer interference from the neighboring cells in the same direction as the current beam. Therefore, the network-side device can estimate, based on a working beam of the terminal, a direction in which the terminal causes interference, then estimate several neighboring cells that suffer interference, configure corresponding specific cells in the configuration information, and instruct the terminal to report measurement results of these specific cells. When determining a target measurement result, the terminal may determine a measurement result of a specific cell as the target measurement result and report the measurement result to the network-side device. This helps reduce signaling overheads for reporting the measurement results.

After receiving the configuration information, the terminal may perform measurement only on the specific cell, or preferentially perform measurement on the specific cell to obtain the measurement result of the specific cell as soon as possible and report the measurement result to the network-side device.

The measurement result meeting the second condition may further include a measurement result in a specific direction. The specific direction may be configured by the network-side device, and the terminal suffers more interference in the specific direction. When determining the target measurement result, the terminal may determine the measurement result in the specific direction as the target measurement result.

The measurement result meeting the second condition may further include a maximum of N measurement results. In other words, a maximum of N measurement results are reported to the network-side device every time reporting of the measurement result is triggered, to reduce an amount of data in information transmission and save network resources.

The target measurement result may further include altitude information of the terminal, location information of the terminal, transmission beam information, and the like. The transmission beam information may include an identifier of the transmission beam and/or an angle of the transmission beam.

When the terminal measures the channel or interference, some measurement results do not need to be reported to the network-side device. For example, when the terminal is within an altitude range, measurement results corresponding to some cells may not be high, that is, interference from some neighboring cells to the terminal is not strong, especially in a case that an NR base station uses a directional beam. In this case, it is insignificant for the terminal to report measurement results corresponding to these cells with weak interference. Therefore, in this embodiment of this application, in the case that the first condition is met, the terminal determines the target measurement result based on the foregoing requirement, and reports the target measurement result to the network-side device. This can effectively avoid reporting unnecessary measurement results to the network-side device and reduce signaling overheads for reporting the measurement results.

For ease of understanding, this embodiment of this application is described by using several specific embodiments and assuming that the terminal is an unmanned aerial vehicle (UAV).

Specific embodiment 1: When an altitude of a UAV meets a preset altitude threshold, only measurement results of neighboring cells meeting a preset quality threshold are reported.

In the related art, for example, in an LTE system, when an altitude of a UAV meets a preset altitude threshold, the UAV triggers reporting of measurement results, to report measurement results of several neighboring cells corresponding to a measurement identifier, and the current altitude of the UAV. Actually, when the altitude of the UAV reaches the altitude threshold, measurement results of some cells may not be high, that is, interference from some neighboring cells to the UAV is not strong, especially in a case that an NR base station uses a directional beam. In this case, it is insignificant for the UAV to report the measurement results corresponding to these cells with weak interference. If the measurement results of these cells are not reported, signaling overheads for reporting the measurement results are reduced. Therefore, when the altitude of the UAV meets the preset altitude threshold and the UAV triggers reporting of the measurement results, screening of the measurement results is considered when the measurement results are reported, to reduce the signaling overheads.

Step 1: When an altitude of a terminal meets a preset altitude threshold, reporting of a measurement result is triggered.

Step 2: When reporting the measurement result, if reporting of the measurement result is triggered by an event, and the triggering event is an event related to the altitude, the UAV reports only a measurement result that meets a preset quality threshold.

The preset quality threshold may be specified by a protocol or configured by a network-side device. For example, the network-side device may configure the quality threshold in reporting configuration information. The quality threshold may be a cell-level threshold or a beam-level threshold. The quality threshold may be an SSB quality threshold, a CSI-RS quality threshold, an RSSI quality threshold, or the like.

Optionally, when the altitude of the UAV meets the preset altitude threshold, the UAV reports only its flight altitude and/or location information.

Specific embodiment 2: When an altitude of a UAV meets a preset altitude threshold, only a measurement result of a specific cell is reported.

If the UAV uses a beam, the UAV may generate strong interference to only neighboring cells in a same direction as the current beam and suffer interference from the neighboring cells in the same direction as the current beam. Therefore, a network-side device can estimate, based on a working beam (beam) of the UAV, a direction in which the UAV causes interference, then estimate several neighboring cells that suffer interference, and instruct the UAV to report measurement results of these cells. The UAV may report only measurement results of these cells when reporting measurement results. This helps reduce signaling overheads for reporting.

Step 1: When an altitude of a UAV meets a preset altitude threshold, reporting of a measurement result is triggered.

Step 2: When reporting the measurement result, if reporting of the measurement result is triggered by an event, and the triggering event is an event related to the altitude, the UAV reports only measurement results of cells in a first cell set.

The first cell set is configured by a network-side device. In addition, because the UAV reports only the measurement results of the cells in the first cell set, the UAV can also only perform or preferentially perform measurement on the cells in the first cell set. The first cell set includes one or more specific cells.

The related art supports configurations of black and white cell lists in a measurement object. A difference of this embodiment lies in that a specific cell list is associated with the altitude threshold herein. The altitude threshold is an altitude threshold.

Specific embodiment 3: When an altitude of a UAV meets a preset altitude threshold and a beam of the UAV meets a preset condition, reporting of a measurement result is triggered.

If the UAV uses a beam, the UAV may generate strong interference to only neighboring cells in a same direction as the current beam and suffer interference from the neighboring cells in the same direction as the current beam. Therefore, triggering reporting of the measurement result can be considered based on a flight altitude of the UAV and a beam direction of the UAV.

Step 1: In a case that an altitude of a UAV meets a preset altitude threshold and a receive/transmit beam of the UAV meets a preset condition, reporting of a measurement result is triggered.

The preset condition includes:
a beam identifier is a preset identifier; and
a beam angle is a value or within a range.

The beam angle may be determined indirectly based on a moving direction of the UAV and a beam direction, or determined directly based on an absolute value of the beam angle.

Step 2: When the UAV reports the measurement result, if an event triggering measurement reporting is that the altitude threshold is met and that the beam meets the preset condition, the UAV may also indicate beam information in the measurement result. The beam information includes the beam identifier and beam angle information.

Specific embodiment 4: When an altitude of a UAV meets a preset altitude threshold, a measurement result variation of a neighboring cell triggers reporting of a measurement result.

After the altitude of the UAV reaches an altitude, the UAV reports the measurement result based on a reporting interval and reporting times configured by a network-side device. However, because the UAV may still be in an ascending state after reaching an altitude, interference received by the UAV may increase rapidly. If the reporting interval configured by the network-side device is excessively long, untimely reporting of the measurement result is caused, resulting in performance losses of the UAV and ground UE. If the reporting interval configured by the network-side device is excessively short, high signaling overheads are caused to the UAV for measurement reporting. Therefore, triggering reporting of the measurement result based on the measurement result variation of the neighboring cell can be considered.

In a period when the UAV meets an event related to the altitude, if one of the following conditions occurs, the UAV triggers reporting of the measurement result:
a measurement result variation exceeds a threshold;
an altitude variation of the UAV exceeds a threshold;
a speed of the UAV exceeds a threshold;
a beam of the UAV changes, or a beam angle variation of the UAV exceeds a threshold; and
a location variation of the UAV exceeds a threshold.

The speed of the UAV may include a horizontal speed and/or a vertical speed, and thresholds corresponding to different objects are the same or different.

Specific embodiment 5: When a plurality of beams all meet a quality threshold, a UAV triggers reporting of a measurement result.

Based on measurement enhancements for event A3/A4/A5 in LTE, in an NR system, a UAV can use beams. In this case, if the UAV generates strong interference on a plurality of beams, it indicates that the UAV suffers severe interference. Therefore, it can be considered that the following solution is introduced for the NR system:
Step 1: A network-side device configures one maximum number of beams, such as numberOfTriggeringBeams, or one maximum number of reference signals, such as numberOfTriggeringRSs.
Step 2: For a measurement identifier, if the number of beams or reference signals with measurement results higher than a quality threshold exceeds numberOfTriggeringBeams/numberOfTriggeringRSs, a UAV triggers reporting of a measurement result.

Specific embodiment 6: Different altitudes are configured with different numberOfTriggeringCells.

In an ascending process of a UAV, when the number of cells meeting event A3/A4/A5 reaches numberOfTriggeringCells, measurement reporting is triggered, and then an altitude of the UAV continues to increase, and the UAV detects more interfering cells, that is, cells meeting event A3/A4/A5 increase. If the UAV can only periodically report a measurement result in this case, similarly to the foregoing embodiment, a problem of untimely reporting of the measurement result occurs. Actually, numberOfTriggeringCells/numberOfTriggeringBeams/numberOfTriggeringRSs may be adjusted based on a flight altitude of the UAV, so that the UAV can trigger reporting of the measurement result in time in a case that new interference is detected. Using numberOfTriggeringCells as an example, a specific method is as follows:

A network-side device may configure a plurality of numberOfTriggeringCells, where each numberOfTriggeringCells corresponds to one altitude or altitude range or altitude level;
the network-side device may configure one numberOfTriggeringCells and a plurality of offsets, where each offset corresponds to one altitude or altitude range or altitude level; and
the network-side device may configure one numberOfTriggeringCells and one offset, where numberOfTriggeringCells increases by one offset when the altitude of the UAV increases by one unit each time.

Specific embodiment 7: When an altitude of a UAV meets a preset altitude threshold and an RSSI of the UAV exceeds a preset threshold, reporting of a measurement result is triggered.

Step 1: A UAV is configured with an RMTC configuration, and performs RSSI measurement based on the RMTC configuration; and the UAV is further configured with an RSSI threshold.

Step 2: When an altitude of the UAV meets a preset altitude threshold and an RSSI measurement result is higher than an RSSI threshold, reporting of the measurement result is triggered.

The RSSI measurement result may be an RSSI measurement result of each beam (beam). Further, to reduce signaling overheads for measurement reporting, a further improvement may be: triggering reporting of the measurement report when the number of beams with RSSI measurement results higher than a quality threshold exceeds numberOfTriggeringBeams.

### Specific embodiment 8:

Step 1: UE is configured with event-triggered measurement reporting, where an event is A4, and a parameter "number of triggering cells" (such as numberOfTriggeringCell) is configured in a corresponding reporting configuration; and the UE performs step 2A or 2B based on a measurement result of a cell.

Step 2A: When one or more cells meet an entering condition (entering condition) corresponding to this event, if the number of cells in cellsTriggeredList is greater than or equal to numberOfTriggeringCell, the UE performs step 3A; otherwise (cellsTriggeredList is less than numberOfTriggeringCell), the UE performs step 3B.

Step 3A: The UE adds these cells to cellsTriggeredList.

Step 3B: The UE adds these cells to cellsTriggeredList. After the addition, if cellsTriggeredList is greater than or equal to numberOfTriggeringCell, the UE triggers measurement reporting.

Step 2B: When one or more cells meet a leaving condition (leaving condition) corresponding to this event, the UE removes the cell meeting the leaving condition from cellsTriggeredList.

In the foregoing procedure, if the UE triggers measurement reporting once and reports measurement results of S cells, the UE triggers measurement reporting again in the following cases:
Case 1: N of the S cells meet the leaving condition of the event, where N is greater than or equal to a first variation threshold.
Case 2: On a basis of the S cells, there are M newly detected cells that meet the entering condition of the event, where M is greater than or equal to the first variation threshold.
Case 3: N of the S cells meet the leaving condition of the event, and M newly detected cells meet the entering condition of the event, where (N+M) is greater than or equal to the first variation threshold.

### Specific embodiment 9:

Step 1: UE is configured with event-triggered measurement reporting, where an event is A4, and a parameter "number of triggering cells" (such as numberOfTriggeringCell) is configured in a corresponding reporting configuration; and the UE performs step 2A or 2B based on a measurement result of a cell.

Step 2A: When one or more cells meet an entering condition (entering condition) corresponding to this event, if the number of cells in cellsTriggeredList is greater than or equal to numberOfTriggeringCell, the UE performs step 3A; otherwise (cellsTriggeredList is less than numberOfTriggeringCell), the UE performs step 3B.

Step 3A: The UE adds these cells to cellsTriggeredList, and the UE records the number of newly added cells into a first variable (for example, if the first variable is originally x, and the number of newly added cells in cellsTriggeredList is y, the first variable is updated to (x+y)); and if the updated first variable (x+y) is greater than or equal to a first variation threshold, the UE triggers measurement reporting. After measurement reporting is triggered, the UE sets the first variable to 0.

Step 3B: The UE adds these cells to cellsTriggeredList. After the addition, if cellsTriggeredList is greater than or equal to numberOfTriggeringCell, the UE triggers measurement reporting, and sets the first variable to 0.

Step 2B: When one or more cells meet a leaving condition (leaving condition) corresponding to this event, the UE removes the cell meeting the leaving condition from cellsTriggeredList, and records the number of newly removed cells into the first variable (for example, if the first variable is originally x, and the number of newly removed cells is y, the first variable is updated to (x+y)); and if the updated first variable (x+y) is greater than or equal to the first variation threshold, the UE triggers measurement reporting. After measurement reporting is triggered, the UE sets the first variable to 0.

In the foregoing embodiment, the event is not limited, and may be, for example, at least one of measurement events A3, A4, and A5. In step 2A, one or more cells meet the entering condition (entering condition) corresponding to this event. Specifically, measurement results of the one or more cells undergo layer-3 filtering, and corresponding cells continuously meet the entering condition within a time to trigger (time to trigger, TTT). The first threshold may be configured by a network side, or specified by a protocol, or reported by the UE.

In the foregoing embodiment, there is a case that for the newly added N cells, N has not reached the first threshold, and then measurement reporting is not triggered. In a short period of time, the N cells meet the leaving condition successively and need to be removed. In this case, 2N is recorded in the first variable. In this case, measurement reporting may be triggered because the first threshold is reached, but this variation is meaningless to the network side. Therefore, the following operation can be introduced:

If a cell in cellTriggeredList meets the leaving condition of the event, and a measurement result of the cell has not been reported to the network side, the UE does not count the cell into the first variable. Alternatively, whether the cell is counted into the first variable depends on an implementation of the UE.

The embodiments of this application have been described by using some specific embodiments. The embodiments of this application can effectively reduce the signaling overheads for reporting the measurement results or improve timeliness of reporting the measurement results.

The measurement result reporting method provided in the embodiments of this application may be performed by a measurement result reporting apparatus. A measurement result reporting apparatus provided in the embodiments of this application is described by assuming that the measurement result reporting method is performed by the measurement result reporting apparatus in the embodiments of this application.

As shown in FIG. 4, a measurement result reporting apparatus 400 includes the following module:
a trigger module 410, configured to trigger reporting of a measurement result in a case that a first condition is met, where
the first condition includes at least one of the following:
   an altitude of a terminal meets a preset altitude condition; a transmission beam meets a preset beam requirement; a measurement result variation is greater than or equal to a preset first variation threshold; an altitude variation of the terminal is greater than or equal to a preset second variation threshold; a location variation of the terminal is greater than or equal to a preset third variation threshold; a speed of the terminal is greater than or equal to a preset speed threshold; the number of target objects with measurement results greater than or equal to a preset first quality threshold is greater than or equal to the maximum number of target objects, where the maximum number of target objects is related to a first specific altitude; and a received signal strength indicator RSSI measurement result is greater than or equal to a first RSSI threshold.

The apparatus provided in this embodiment of this application triggers reporting of the measurement result in the case that the first condition is met, where the first condition may be at least one of the following: the altitude of the terminal meets the preset altitude condition; the transmission beam meets the preset beam requirement; the measurement result variation is greater than or equal to the preset first variation threshold; the altitude variation of the terminal is greater than or equal to the preset second variation threshold; the location variation of the terminal is greater than or equal to the preset third variation threshold; the speed of the terminal is greater than or equal to the preset speed threshold; the number of target objects with measurement results greater than or equal to the preset first quality threshold is greater than or equal to the maximum number of target objects; and the RSSI measurement result is greater than or equal to the first RSSI threshold. In other words, when any one of the foregoing conditions is met, reporting of the measurement result may be triggered to report the measurement result to the network-side device in time, so that the network-side device can perform corresponding interference avoidance or take a corresponding remedial action based on the measurement result reported by the terminal to improve performance of a communication system.

In an implementation, the measurement result variation includes at least one of the following:
a signal quality variation;
a variation of the number of target objects with measurement results greater than or equal to the first quality threshold; and
a variation of the number of cells that meet an entering condition corresponding to a measurement event and/or a leaving condition corresponding to a measurement event.

In an implementation, the measurement result reporting apparatus 400 further includes a first variable change module.

If N new cells meet the entering condition corresponding to the measurement event, the first variable change module adds N to a value of a first variable; and
if M old cells meet the leaving condition corresponding to the measurement event, the first variable change module adds M to the value of the first variable, where
the first variable is used to indicate the variation of the number of cells meeting the entering condition corresponding to the measurement event and/or the leaving condition corresponding to the measurement event, N is a natural number, and M is a natural number.

In an implementation, if M cells meet the leaving condition corresponding to the measurement event and the M cells have not been reported to a network side, the first variable change module subtracts 2M from the value of the first variable, or subtracts M from the value of the first variable.

In an implementation, in a case that the value of the first variable is greater than or equal to the first variation threshold, the trigger module 410 triggers reporting of the measurement result, and sets the value of the first variable to 0.

In a specific implementation of this application, that a transmission beam meets a preset beam requirement includes: when the altitude of the terminal is within a preset altitude range, the transmission beam meets the preset beam requirement; and/or
that a measurement result variation is greater than or equal to a preset first variation threshold includes: when the altitude of the terminal is within a preset altitude range, the measurement result variation is greater than or equal to the preset first variation threshold; and/or
that an altitude variation of the terminal is greater than or equal to a preset second variation threshold includes: when the altitude of the terminal is within a preset altitude range, the altitude variation of the terminal is greater than or equal to the preset second variation threshold; and/or
that a location variation of the terminal is greater than or equal to a preset third variation threshold includes: when the altitude of the terminal is within a preset altitude range, the location variation of the terminal is greater than or equal to the preset third variation threshold; and/or
that a speed of the terminal is greater than or equal to a preset speed threshold includes: when the altitude of the terminal is within a preset altitude range, the speed of the terminal is greater than or equal to the preset speed threshold; and/or
that a received signal strength indicator RSSI measurement result is greater than or equal to a first RSSI threshold includes: when the altitude of the terminal is within a preset altitude range, the RSSI measurement result is greater than or equal to the first RSSI threshold.

In a specific implementation of this application, the maximum number of target objects is related to a first specific altitude.

In a specific implementation of this application, the maximum number of target objects is valid when the terminal reaches the first specific altitude.

In a specific implementation of this application, the target object includes at least one of a cell, a beam, and a reference signal.

In a specific implementation of this application, the beam requirement includes at least one of the following:
a beam identifier of the transmission beam is a preset identifier;
a beam angle of the transmission beam is a preset angle value or within a preset angle range;
the transmission beam changes;
a variation of the beam angle of the transmission beam is greater than or equal to a preset fourth variation threshold;
quality of the transmission beam is less than or equal to a preset second quality threshold; and
an interference measurement result of the transmission beam is greater than or equal to a preset third quality threshold.

In a specific implementation of this application, the measurement result reporting apparatus 400 further includes a first configuration module, configured to:
configure one or more maximum numbers of target objects, where each maximum number of target objects corresponds to one specific altitude or altitude range or altitude level; and/or
configure one first reference value and a plurality of first offsets, where each first offset corresponds to one specific altitude or altitude range or altitude level, and each maximum number of target objects is obtained based on the first reference value and one of the plurality of first offsets; and/or
configure one second reference value and one fixed second offset, where the second offset corresponds to a fixed altitude variation, and each maximum number of target objects is obtained based on the second reference value and the second offset.

In a specific implementation of this application, that the number of target objects with measurement results greater than or equal to a preset first quality threshold is greater than or equal to the maximum number of target objects includes at least one of the following:
the number of target objects with RSSI measurement results greater than or equal to the preset first quality threshold is greater than or equal to the maximum number of target objects; and
the number of target objects with beam measurement results greater than or equal to the preset first quality threshold is greater than or equal to the maximum number of target objects.

In a specific implementation of this application, the RSSI measurement result includes an RSSI measurement result of each transmission beam.

In a specific implementation of this application, if the first condition for triggering reporting of the measurement result includes that a transmission beam meets a preset beam requirement, the reported measurement result includes transmission beam information.

In a specific implementation of this application, the trigger module 410 is configured to:
report a target measurement result to a network-side device in the case that the first condition is met, where
the target measurement result includes: a measurement result meeting a second condition; and/or altitude information of the terminal; and/or location information of the terminal; and/or transmission beam information.

In a specific implementation of this application, the measurement result meeting the second condition includes at least one of the following:
a measurement result with quality greater than or equal to a preset fourth quality threshold; a measurement result of a specific cell; a measurement result in a specific direction; and a maximum of N measurement results, where N is a positive integer.

In a specific implementation of this application, the fourth quality threshold is a cell-level threshold or a beam-level threshold.

In a specific implementation of this application, the measurement result reporting apparatus 400 further includes a first receiving module, configured to:
before reporting of the measurement result is triggered in the case that the first condition is met, receive configuration information, where one or more specific cells are configured in the configuration information.

In a specific implementation of this application, the measurement result reporting apparatus 400 further includes an executing module, configured to:
preferentially perform measurement on the specific cell.

In a specific implementation of this application, the transmission beam information includes an identifier of the transmission beam and/or an angle of the transmission beam.

The measurement result reporting apparatus 400 provided in this embodiment of this application can implement each process implemented in the method embodiment shown in FIG. 2, with the same technical effect achieved. To avoid repetition, details are not described herein again.

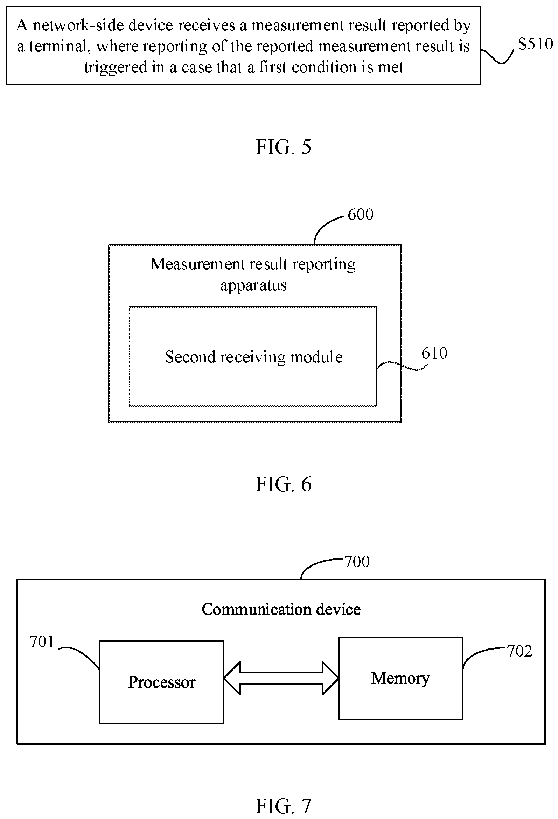

Corresponding to the method embodiment shown in FIG. 2, an embodiment of this application further provides a measurement result reporting method. As shown in FIG. 5, the method may include the following step.

S510. A network-side device receives a measurement result reported by a terminal, where reporting of the reported measurement result is triggered in a case that a first condition is met, where
the first condition includes at least one of the following:
an altitude of the terminal meets a preset altitude condition; a transmission beam meets a preset beam requirement; a measurement result variation is greater than or equal to a preset first variation threshold; an altitude variation of the terminal is greater than or equal to a preset second variation threshold; a location variation of the terminal is greater than or equal to a preset third variation threshold; a speed of the terminal is greater than or equal to a preset speed threshold; the number of target objects with measurement results greater than or equal to a preset first quality threshold is greater than or equal to the maximum number of target objects; and a received signal strength indicator RSSI measurement result is greater than or equal to a first RSSI threshold.

By using the method provided in this embodiment of this application, the network-side device receives the measurement result reported by the terminal, where reporting of the reported measurement result is triggered in the case that the first condition is met, where the first condition may be at least one of the following: the altitude of the terminal meets the preset altitude condition; the transmission beam meets the preset beam requirement; the measurement result variation is greater than or equal to the preset first variation threshold; the altitude variation of the terminal is greater than or equal to the preset second variation threshold; the location variation of the terminal is greater than or equal to the preset third variation threshold; the speed of the terminal is greater than or equal to the preset speed threshold; the number of target objects with measurement results greater than or equal to the preset first quality threshold is greater than or equal to the maximum number of target objects; and the RSSI measurement result is greater than or equal to the first RSSI threshold. In other words, when any one of the foregoing conditions is met, reporting of the measurement result may be triggered to report the measurement result to the network-side device in time, so that the network-side device can perform corresponding interference avoidance or take a corresponding remedial action based on the measurement result reported by the terminal to improve performance of a communication system.

In an implementation, the measurement result variation includes at least one of the following:
a signal quality variation;
a variation of the number of target objects with measurement results greater than or equal to the first quality threshold; and
a variation of the number of cells that meet an entering condition corresponding to a measurement event and/or a leaving condition corresponding to a measurement event.

In a specific implementation of this application, that a transmission beam meets a preset beam requirement includes: when the altitude of the terminal is within a preset altitude range, the transmission beam meets the preset beam requirement; and/or
that a measurement result variation is greater than or equal to a preset first variation threshold includes: when the altitude of the terminal is within a preset altitude range, the measurement result variation is greater than or equal to the preset first variation threshold; and/or
that an altitude variation of the terminal is greater than or equal to a preset second variation threshold includes: when the altitude of the terminal is within a preset altitude range, the altitude variation of the terminal is greater than or equal to the preset second variation threshold; and/or
that a location variation of the terminal is greater than or equal to a preset third variation threshold includes: when the altitude of the terminal is within a preset altitude range, the location variation of the terminal is greater than or equal to the preset third variation threshold; and/or
that a speed of the terminal is greater than or equal to a preset speed threshold includes: when the altitude of the terminal is within a preset altitude range, the speed of the terminal is greater than or equal to the preset speed threshold; and/or
that a received signal strength indicator RSSI measurement result is greater than or equal to a first RSSI threshold includes: when the altitude of the terminal is within a preset altitude range, the RSSI measurement result is greater than or equal to the first RSSI threshold.

In a specific implementation of this application, the maximum number of target objects is related to a first specific altitude.

In a specific implementation of this application, the maximum number of target objects is valid when the terminal reaches the first specific altitude.

In a specific implementation of this application, the target object includes at least one of a cell, a beam, and a reference signal.

In a specific implementation of this application, that a transmission beam meets a preset beam requirement includes at least one of the following:
a beam identifier of the transmission beam is a preset identifier;
a beam angle of the transmission beam is a preset angle value or within a preset angle range;
the transmission beam changes;
a variation of the beam angle of the transmission beam is greater than or equal to a preset fourth variation threshold;
quality of the transmission beam is less than or equal to a preset second quality threshold; and
an interference measurement result of the transmission beam is greater than or equal to a preset third quality threshold.

In a specific implementation of this application, the method further includes:
the network-side device configures one or more maximum numbers of target objects for the terminal, where each maximum number of target objects corresponds to one specific altitude or altitude range or altitude level; and/or
the network-side device configures one first reference value and a plurality of first offsets for the terminal, where each first offset corresponds to one specific altitude or altitude range or altitude level, and each maximum number of target objects is obtained based on the first reference value and one of the plurality of first offsets; and/or
the network-side device configures one second reference value and one fixed second offset for the terminal, where the second offset corresponds to a fixed altitude variation, and each maximum number of target objects is obtained based on the second reference value and the second offset.

In a specific implementation of this application, that the number of target objects with measurement results greater than or equal to a preset first quality threshold is greater than or equal to the maximum number of target objects includes at least one of the following:
the number of target objects with RSSI measurement results greater than or equal to the preset first quality threshold is greater than or equal to the maximum number of target objects; and
the number of target objects with beam measurement results greater than or equal to the preset first quality threshold is greater than or equal to the maximum number of target objects.

In a specific implementation of this application, the RSSI measurement result includes an RSSI measurement result of each transmission beam.

In a specific implementation of this application, if the first condition for triggering reporting of the measurement result includes that a transmission beam meets a preset beam requirement, the reported measurement result includes transmission beam information.

In a specific implementation of this application, the reported measurement result is a target measurement result determined in the case that the first condition is met, where
the target measurement result includes:
a measurement result meeting a second condition; and/or altitude information of the terminal; and/or location information of the terminal; and/or transmission beam information.

In a specific implementation of this application, the measurement result meeting the second condition includes at least one of the following:
a measurement result with quality greater than or equal to a preset fourth quality threshold; a measurement result of a specific cell; a measurement result in a specific direction; and a maximum of N measurement results, where N is a positive integer.

In a specific implementation of this application, before the network-side device receives the measurement result reported by the terminal, the method further includes:
the network-side device sends configuration information to the terminal, where one or more specific cells are configured in the configuration information.

In a specific implementation of this application, the transmission beam information includes an identifier of the transmission beam and/or an angle of the transmission beam.

For a specific implementation of the measurement result reporting method provided in this embodiment of this application, reference may be made to each process implemented in the method embodiment shown in FIG. 2, with the same technical effect achieved. To avoid repetition, details are not described herein again.

The measurement result reporting method provided in the embodiments of this application may be performed by a measurement result reporting apparatus. A measurement result reporting apparatus provided in the embodiments of this application is described by assuming that the measurement result reporting method is performed by the measurement result reporting apparatus in the embodiments of this application.

As shown in FIG. 6, a measurement result reporting apparatus 600 includes the following module:
a second receiving module 610, configured to receive a measurement result reported by a terminal, where reporting of the reported measurement result is triggered in a case that a first condition is met, where
the first condition includes at least one of the following:
   an altitude of the terminal meets a preset altitude condition; a transmission beam meets a preset beam requirement; a measurement result variation is greater than or equal to a preset first variation threshold; an altitude variation of the terminal is greater than or equal to a preset second variation threshold; a location variation of the terminal is greater than or equal to a preset third variation threshold; a speed of the terminal is greater than or equal to a preset speed threshold; the number of target objects with measurement results greater than or equal to a preset first quality threshold is greater than or equal to the maximum number of target objects; and a received signal strength indicator RSSI measurement result is greater than or equal to a first RSSI threshold.

The apparatus provided in this embodiment of this application receives the measurement result reported by the terminal, where reporting of the reported measurement result is triggered in the case that the first condition is met, where the first condition may be at least one of the following: the altitude of the terminal meets the preset altitude condition; the transmission beam meets the preset beam requirement; the measurement result variation is greater than or equal to the preset first variation threshold; the altitude variation of the terminal is greater than or equal to the preset second variation threshold; the location variation of the terminal is greater than or equal to the preset third variation threshold; the speed of the terminal is greater than or equal to the preset speed threshold; the number of target objects with measurement results greater than or equal to the preset first quality threshold is greater than or equal to the maximum number of target objects; and the RSSI measurement result is greater than or equal to the first RSSI threshold. In other words, when any one of the foregoing conditions is met, reporting of the measurement result may be triggered to report the measurement result to the network-side device in time, so that the network-side device can perform corresponding interference avoidance or take a corresponding remedial action based on the measurement result reported by the terminal to improve performance of a communication system.

In an implementation, the measurement result variation includes at least one of the following:
a signal quality variation;
a variation of the number of target objects with measurement results greater than or equal to the first quality threshold; and
a variation of the number of cells that meet an entering condition corresponding to a measurement event and/or a leaving condition corresponding to a measurement event.

In a specific implementation of this application, that a transmission beam meets a preset beam requirement includes: when the altitude of the terminal is within a preset altitude range, the transmission beam meets the preset beam requirement; and/or
that a measurement result variation is greater than or equal to a preset first variation threshold includes: when the altitude of the terminal is within a preset altitude range, the measurement result variation is greater than or equal to the preset first variation threshold; and/or
that an altitude variation of the terminal is greater than or equal to a preset second variation threshold includes: when the altitude of the terminal is within a preset altitude range, the altitude variation of the terminal is greater than or equal to the preset second variation threshold; and/or
that a location variation of the terminal is greater than or equal to a preset third variation threshold includes: when the altitude of the terminal is within a preset altitude range, the location variation of the terminal is greater than or equal to the preset third variation threshold; and/or
that a speed of the terminal is greater than or equal to a preset speed threshold includes: when the altitude of the terminal is within a preset altitude range, the speed of the terminal is greater than or equal to the preset speed threshold; and/or
that a received signal strength indicator RSSI measurement result is greater than or equal to a first RSSI threshold includes: when the altitude of the terminal is within a preset altitude range, the RSSI measurement result is greater than or equal to the first RSSI threshold.

In a specific implementation of this application, the maximum number of target objects is related to a first specific altitude.

In a specific implementation of this application, the maximum number of target objects is valid when the terminal reaches the first specific altitude.

In a specific implementation of this application, the target object includes at least one of a cell, a beam, and a reference signal.

In a specific implementation of this application, that a transmission beam meets a preset beam requirement includes at least one of the following:
a beam identifier of the transmission beam is a preset identifier;
a beam angle of the transmission beam is a preset angle value or within a preset angle range;
the transmission beam changes;
a variation of the beam angle of the transmission beam is greater than or equal to a preset fourth variation threshold;
quality of the transmission beam is less than or equal to a preset second quality threshold; and
an interference measurement result of the transmission beam is greater than or equal to a preset third quality threshold.

In a specific implementation of this application, the measurement result reporting apparatus 600 further includes a second configuration module, configured to:
configure one or more maximum numbers of target objects for the terminal, where each maximum number of target objects corresponds to one specific altitude or altitude range or altitude level; and/or
configure one first reference value and a plurality of first offsets for the terminal, where each first offset corresponds to one specific altitude or altitude range or altitude level, and each maximum number of target objects is obtained based on the first reference value and one of the plurality of first offsets; and/or
configure one second reference value and one fixed second offset for the terminal, where the second offset corresponds to a fixed altitude variation, and each maximum number of target objects is obtained based on the second reference value and the second offset.

In a specific implementation of this application, that the number of target objects with measurement results greater than or equal to a preset first quality threshold is greater than or equal to the maximum number of target objects includes at least one of the following:
the number of target objects with RSSI measurement results greater than or equal to the preset first quality threshold is greater than or equal to the maximum number of target objects; and
the number of target objects with beam measurement results greater than or equal to the preset first quality threshold is greater than or equal to the maximum number of target objects.

In a specific implementation of this application, the RSSI measurement result includes an RSSI measurement result of each transmission beam.

In a specific implementation of this application, if the first condition for triggering reporting of the measurement result includes that a transmission beam meets a preset beam requirement, the reported measurement result includes transmission beam information.

In a specific implementation of this application, the reported measurement result is a target measurement result determined in the case that the first condition is met, where
the target measurement result includes: a measurement result meeting a second condition; and/or altitude information of the terminal; and/or location information of the terminal; and/or transmission beam information.

In a specific implementation of this application, the measurement result meeting the second condition includes at least one of the following:
a measurement result with quality greater than or equal to a preset fourth quality threshold; a measurement result of a specific cell; a measurement result in a specific direction; and a maximum of N measurement results, where N is a positive integer.

In a specific implementation of this application, the measurement result reporting apparatus 600 further includes a sending module, configured to:
before the measurement result reported by the terminal is received, send configuration information to the terminal, where one or more specific cells are configured in the configuration information.

In a specific implementation of this application, the transmission beam information includes an identifier of the transmission beam and/or an angle of the transmission beam.

The measurement result reporting apparatus 600 provided in this embodiment of this application can implement each process implemented in the method embodiment shown in FIG. 5, with the same technical effect achieved. To avoid repetition, details are not described herein again.

As shown in FIG. 7, an embodiment of this application further provides a communication device 700, including a processor 701 and a memory 702. The memory 702 stores a program or instructions capable of running on the processor 701. For example, when the communication device 700 is a terminal, and the program or instructions are executed by the processor 701, the steps of the foregoing method embodiment shown in FIG. 2 are implemented, with the same technical effect achieved. When the communication device 700 is a network-side device, and the program or instructions are executed by the processor 701, the steps of the foregoing method embodiment shown in FIG. 5 are implemented, with the same technical effect achieved. To avoid repetition, details are not described herein again.

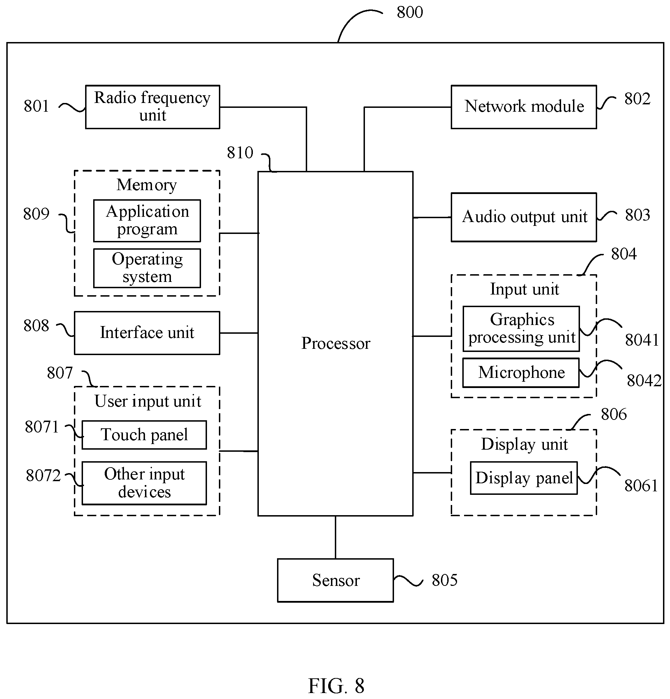

Specifically, an embodiment of this application further provides a terminal. As shown in FIG. 8, the terminal 800 includes but is not limited to at least some components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (for example, a battery) supplying power to all components. The power supply may be logically connected to the processor 810 through a power management system. In this way, functions such as charge management, discharge management, and power consumption management are implemented by using the power management system. The terminal structure shown in FIG. 8 does not constitute a limitation on the terminal. The terminal may include more or fewer components than those shown in the figure, or some components are combined, or component arrangements are different. Details are not described herein again.

It should be understood that, in this embodiment of this application, the input unit 804 may include a graphics processing unit (Graphics Processing Unit, GPU) 8041 and a microphone 8042. The graphics processing unit 8041 processes image data of a still picture or video obtained by an image capture apparatus (such as a camera) in a video capture mode or an image capture mode. The display unit 806 may include a display panel 8061, and the display panel 8061 may be configured in a form of a liquid crystal display, an organic light-emitting diode, or the like. The user input unit 807 includes at least one of a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 801 may transmit the downlink data to the processor 810 for processing. In addition, the radio frequency unit 801 may send uplink data to the network-side device. Usually, the radio frequency unit 801 includes but is not limited to an antenna, an amplifier, a transceiver, a coupler, a low noise amplifier, a duplexer, and the like.

The memory 809 may be configured to store software programs or instructions and various data. The memory 809 may primarily include a first storage area for storing programs or instructions and a second storage area for storing data. The first storage area may store an operating system, an application program or instructions required by at least one function (such as an audio play function and an image play function), and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 809 in this embodiment of this application includes but is not limited to these and any other suitable types of memories.

The processor 810 may include one or more processing units. Optionally, the processor 810 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 810.

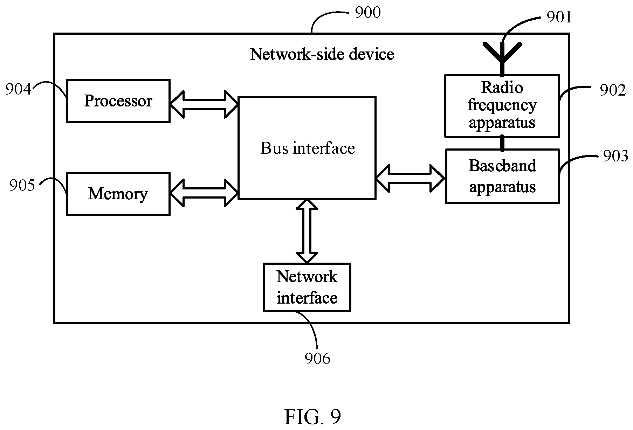

Specifically, an embodiment of this application further provides a network-side device. As shown in FIG. 9, the network-side device 900 includes an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information by using the antenna 901, and sends the received information to the baseband apparatus 903 for processing. In a downlink direction, the baseband apparatus 903 processes to-be-sent information, and sends the information to the radio frequency apparatus 902; and the radio frequency apparatus 902 processes the received information and then sends the information out by using the antenna 901.

The method performed by the network-side device in the foregoing embodiment may be implemented in the baseband apparatus 903. The baseband apparatus 903 includes a baseband processor.

An embodiment of this application further provides a readable storage medium. The readable storage medium stores a program or instructions. When the program or instructions are executed by a processor, each process of the foregoing method embodiment shown in FIG. 2 or FIG. 5 is implemented, with the same technical effect achieved. To avoid repetition, details are not described herein again.

The processor is a processor in the terminal or network-side device in the foregoing embodiment. The readable storage medium includes a computer-readable storage medium, such as a computer read-only memory ROM, a random access memory RAM, a magnetic disk, or an optical disc.

In addition, an embodiment of this application provides a computer program or program product. The computer program or program product is stored in a storage medium. The computer program or program product is executed by at least one processor to implement each process of the foregoing method embodiment shown in FIG. 2 or the foregoing method embodiment shown in FIG. 5, with the same technical effect achieved. To avoid repetition, details are not described herein again.

An embodiment of this application further provides a communication system, including a terminal and a network-side device. The terminal may be configured to perform the steps of the foregoing method shown in FIG. 2. The network-side device may be configured to perform the steps of the foregoing method shown in FIG. 5.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A measurement result reporting method, comprising:
triggering, by a terminal, reporting of a measurement result in a case that a first condition is met, wherein
the first condition comprises at least one of the following:
an altitude of the terminal meets a preset altitude condition;
a transmission beam meets a preset beam requirement;
a measurement result variation is greater than or equal to a preset first variation threshold;
an altitude variation of the terminal is greater than or equal to a preset second variation threshold;
a location variation of the terminal is greater than or equal to a preset third variation threshold;
a speed of the terminal is greater than or equal to a preset speed threshold;
the number of target objects with measurement results greater than or equal to a preset first quality threshold is greater than or equal to the maximum number of target objects; and
a received signal strength indicator RSSI measurement result is greater than or equal to a first RSSI threshold.

2. The measurement result reporting method according to claim 1, wherein the measurement result variation comprises at least one of the following:
a signal quality variation;
a variation of the number of target objects with measurement results greater than or equal to the first quality threshold; and
a variation of the number of cells that meet an entering condition corresponding to a measurement event and/or a leaving condition corresponding to a measurement event.

3. The measurement result reporting method according to claim 2, wherein the measurement result reporting method further comprises at least one of the following:
if N new cells meet the entering condition corresponding to the measurement event, adding N to a value of a first variable; and
if M old cells meet the leaving condition corresponding to the measurement event, adding M to the value of the first variable, wherein
the first variable is used to indicate the variation of the number of cells meeting the entering condition corresponding to the measurement event and/or the leaving condition corresponding to the measurement event, N is a natural number, and M is a natural number.

4. The measurement result reporting method according to claim 2 or 3, wherein
if M cells meet the leaving condition corresponding to the measurement event and the M cells have not been reported to a network side, subtracting 2M from the value of the first variable, or subtracting M from the value of the first variable.

5. The measurement result reporting method according to claim 3 or 4, wherein the measurement result reporting method further comprises:
in a case that the value of the first variable is greater than or equal to the first variation threshold, triggering reporting of the measurement result, and setting the value of the first variable to 0.

6. The measurement result reporting method according to claim 1, wherein that a transmission beam meets a preset beam requirement comprises: when the altitude of the terminal is within a preset altitude range, the transmission beam meets the preset beam requirement; and/or
that a measurement result variation is greater than or equal to a preset first variation threshold comprises: when the altitude of the terminal is within a preset altitude range, the measurement result variation is greater than or equal to the preset first variation threshold; and/or
that an altitude variation of the terminal is greater than or equal to a preset second variation threshold comprises: when the altitude of the terminal is within a preset altitude range, the altitude variation of the terminal is greater than or equal to the preset second variation threshold; and/or
that a location variation of the terminal is greater than or equal to a preset third variation threshold comprises: when the altitude of the terminal is within a preset altitude range, the location variation of the terminal is greater than or equal to the preset third variation threshold; and/or
that a speed of the terminal is greater than or equal to a preset speed threshold comprises: when the altitude of the terminal is within a preset altitude range, the speed of the terminal is greater than or equal to the preset speed threshold; and/or
that a received signal strength indicator RSSI measurement result is greater than or equal to a first RSSI threshold comprises: when the altitude of the terminal is within a preset altitude range, the RSSI measurement result is greater than or equal to the first RSSI threshold.

7. The measurement result reporting method according to claim 1, wherein the maximum number of target objects is related to a first specific altitude.

8. The measurement result reporting method according to claim 7, wherein the maximum number of target objects is valid when the terminal reaches the first specific altitude.

9. The measurement result reporting method according to claim 1 or 2, wherein the target object comprises at least one of a cell, a beam, and a reference signal.

10. The measurement result reporting method according to claim 1, wherein that a transmission beam meets a preset beam requirement comprises at least one of the following:
a beam identifier of the transmission beam is a preset identifier;
a beam angle of the transmission beam is a preset angle value or within a preset angle range;
the transmission beam changes;
a variation of the beam angle of the transmission beam is greater than or equal to a preset fourth variation threshold;
quality of the transmission beam is less than or equal to a preset second quality threshold; and
an interference measurement result of the transmission beam is greater than or equal to a preset third quality threshold.

11. The measurement result reporting method according to claim 1, further comprising:
the terminal being configured with one or more maximum numbers of target objects, wherein each maximum number of target objects corresponds to one specific altitude or altitude range or altitude level; and/or
the terminal being configured with one first reference value and a plurality of first offsets, wherein each first offset corresponds to one specific altitude or altitude range or altitude level, and each maximum number of target objects is obtained based on the first reference value and one of the plurality of first offsets; and/or
the terminal being configured with one second reference value and one fixed second offset, wherein the second offset corresponds to a fixed altitude variation, and each maximum number of target objects is obtained based on the second reference value and the second offset.

12. The measurement result reporting method according to claim 1, wherein that the number of target objects with measurement results greater than or equal to a preset first quality threshold is greater than or equal to the maximum number of target objects comprises at least one of the following:
the number of target objects with RSSI measurement results greater than or equal to the preset first quality threshold is greater than or equal to the maximum number of target objects; and
the number of target objects with beam measurement results greater than or equal to the preset first quality threshold is greater than or equal to the maximum number of target objects.

13. The measurement result reporting method according to claim 12, wherein the RSSI measurement result comprises an RSSI measurement result of each transmission beam.

14. The measurement result reporting method according to claim 1, wherein if the first condition for triggering reporting of the measurement result comprises that a transmission beam meets a preset beam requirement, the reported measurement result comprises transmission beam information.

15. The measurement result reporting method according to claim 1, wherein the triggering, by a terminal, reporting of a measurement result in a case that a first condition is met comprises:
reporting, by the terminal, a target measurement result to a network-side device in the case that the first condition is met, wherein
the target measurement result comprises:
a measurement result meeting a second condition; and/or
altitude information of the terminal; and/or
location information of the terminal; and/or
transmission beam information.

16. The measurement result reporting method according to claim 15, wherein the measurement result meeting the second condition comprises at least one of the following:
a measurement result with quality greater than or equal to a preset fourth quality threshold;
a measurement result of a specific cell;
a measurement result in a specific direction; and
a maximum of N measurement results, wherein N is a positive integer.

17. The measurement result reporting method according to claim 16, wherein the fourth quality threshold is a cell-level threshold or a beam-level threshold.

18. The measurement result reporting method according to claim 16, wherein before the triggering, by a terminal, reporting of a measurement result in a case that a first condition is met, the method further comprises:
receiving, by the terminal, configuration information, wherein one or more specific cells are configured in the configuration information.

19. The measurement result reporting method according to claim 16, further comprising:
preferentially performing, by the terminal, measurement on the specific cell.

20. The measurement result reporting method according to any one of claims 14 to 19, wherein the transmission beam information comprises an identifier of the transmission beam and/or an angle of the transmission beam.

21. A measurement result reporting apparatus, comprising:
a trigger module, configured to trigger reporting of a measurement result in a case that a first condition is met, wherein
the first condition comprises at least one of the following:
an altitude of a terminal meets a preset altitude condition;
a transmission beam meets a preset beam requirement;
a measurement result variation is greater than or equal to a preset first variation threshold;
an altitude variation of the terminal is greater than or equal to a preset second variation threshold;
a location variation of the terminal is greater than or equal to a preset third variation threshold;
a speed of the terminal is greater than or equal to a preset speed threshold;
the number of target objects with measurement results greater than or equal to a preset first quality threshold is greater than or equal to the maximum number of target objects; and
a received signal strength indicator RSSI measurement result is greater than or equal to a first RSSI threshold.

22. A measurement result reporting method, comprising:
receiving, by a network-side device, a measurement result reported by a terminal, wherein reporting of the reported measurement result is triggered in a case that a first condition is met, wherein
the first condition comprises at least one of the following:
an altitude of the terminal meets a preset altitude condition;
a transmission beam meets a preset beam requirement;
a measurement result variation is greater than or equal to a preset first variation threshold;
an altitude variation of the terminal is greater than or equal to a preset second variation threshold;
a location variation of the terminal is greater than or equal to a preset third variation threshold;
a speed of the terminal is greater than or equal to a preset speed threshold;
the number of target objects with measurement results greater than or equal to a preset first quality threshold is greater than or equal to the maximum number of target objects; and
a received signal strength indicator RSSI measurement result is greater than or equal to a first RSSI threshold.

23. The measurement result reporting method according to claim 22, wherein the measurement result variation comprises at least one of the following:
a signal quality variation;
a variation of the number of target objects with measurement results greater than or equal to the first quality threshold; and
a variation of the number of cells that meet an entering condition corresponding to a measurement event and/or a leaving condition corresponding to a measurement event.

24. The measurement result reporting method according to claim 22, wherein that a transmission beam meets a preset beam requirement comprises: when the altitude of the terminal is within a preset altitude range, the transmission beam meets the preset beam requirement; and/or
that a measurement result variation is greater than or equal to a preset first variation threshold comprises: when the altitude of the terminal is within a preset altitude range, the measurement result variation is greater than or equal to the preset first variation threshold; and/or
that an altitude variation of the terminal is greater than or equal to a preset second variation threshold comprises: when the altitude of the terminal is within a preset altitude range, the altitude variation of the terminal is greater than or equal to the preset second variation threshold; and/or
that a location variation of the terminal is greater than or equal to a preset third variation threshold comprises: when the altitude of the terminal is within a preset altitude range, the location variation of the terminal is greater than or equal to the preset third variation threshold; and/or
that a speed of the terminal is greater than or equal to a preset speed threshold comprises: when the altitude of the terminal is within a preset altitude range, the speed of the terminal is greater than or equal to the preset speed threshold; and/or
that a received signal strength indicator RSSI measurement result is greater than or equal to a first RSSI threshold comprises: when the altitude of the terminal is within a preset altitude range, the RSSI measurement result is greater than or equal to the first RSSI threshold.

25. The measurement result reporting method according to claim 22, wherein the maximum number of target objects is related to a first specific altitude.

26. The measurement result reporting method according to claim 25, wherein the maximum number of target objects is valid when the terminal reaches the first specific altitude.

27. The measurement result reporting method according to claim 22, wherein the target object comprises at least one of a cell, a beam, and a reference signal.

28. The measurement result reporting method according to claim 22, wherein that a transmission beam meets a preset beam requirement comprises at least one of the following:
a beam identifier of the transmission beam is a preset identifier;
a beam angle of the transmission beam is a preset angle value or within a preset angle range;
the transmission beam changes;
a variation of the beam angle of the transmission beam is greater than or equal to a preset fourth variation threshold;
quality of the transmission beam is less than or equal to a preset second quality threshold; and
an interference measurement result of the transmission beam is greater than or equal to a preset third quality threshold.

29. The measurement result reporting method according to claim 22, further comprising:
configuring, by the network-side device, one or more maximum numbers of target objects for the terminal, wherein each maximum number of target objects corresponds to one specific altitude or altitude range or altitude level; and/or
configuring, by the network-side device, one first reference value and a plurality of first offsets for the terminal, wherein each first offset corresponds to one specific altitude or altitude range or altitude level, and each maximum number of target objects is obtained based on the first reference value and one of the plurality of first offsets; and/or
configuring, by the network-side device, one second reference value and one fixed second offset for the terminal, wherein the second offset corresponds to a fixed altitude variation, and each maximum number of target objects is obtained based on the second reference value and the second offset.

30. The measurement result reporting method according to claim 22, wherein that the number of target objects with measurement results greater than or equal to a preset first quality threshold is greater than or equal to the maximum number of target objects comprises at least one of the following:
the number of target objects with RSSI measurement results greater than or equal to the preset first quality threshold is greater than or equal to the maximum number of target objects; and
the number of target objects with beam measurement results greater than or equal to the preset first quality threshold is greater than or equal to the maximum number of target objects.

31. The measurement result reporting method according to claim 30, wherein the RSSI measurement result comprises an RSSI measurement result of each transmission beam.

32. The measurement result reporting method according to claim 22, wherein if the first condition for triggering reporting of the measurement result comprises that a transmission beam meets a preset beam requirement, the reported measurement result comprises transmission beam information.

33. The measurement result reporting method according to claim 22, wherein the reported measurement result is a target measurement result determined in the case that the first condition is met, wherein
the target measurement result comprises:
a measurement result meeting a second condition; and/or
altitude information of the terminal; and/or
location information of the terminal; and/or
transmission beam information.

34. The measurement result reporting method according to claim 33, wherein the measurement result meeting the second condition comprises at least one of the following:
a measurement result with quality greater than or equal to a preset fourth quality threshold;
a measurement result of a specific cell;
a measurement result in a specific direction; and
a maximum of N measurement results, wherein N is a positive integer.

35. The measurement result reporting method according to claim 34, wherein before the receiving, by a network-side device, a measurement result reported by a terminal, the method further comprises:
sending, by the network-side device, configuration information to the terminal, wherein one or more specific cells are configured in the configuration information.

36. The measurement result reporting method according to any one of claims 32 to 35, wherein the transmission beam information comprises an identifier of the transmission beam and/or an angle of the transmission beam.

37. A measurement result reporting apparatus, comprising:
a second receiving module, configured to receive a measurement result reported by a terminal, wherein reporting of the reported measurement result is triggered in a case that a first condition is met, wherein
the first condition comprises at least one of the following:
an altitude of the terminal meets a preset altitude condition;
a transmission beam meets a preset beam requirement;
a measurement result variation is greater than or equal to a preset first variation threshold;
an altitude variation of the terminal is greater than or equal to a preset second variation threshold;
a location variation of the terminal is greater than or equal to a preset third variation threshold;
a speed of the terminal is greater than or equal to a preset speed threshold;
the number of target objects with measurement results greater than or equal to a preset first quality threshold is greater than or equal to the maximum number of target objects; and
a received signal strength indicator RSSI measurement result is greater than or equal to a first RSSI threshold.

38. A terminal, comprising a processor and a memory, wherein the memory stores a program or instructions capable of running on the processor, and when the program or instructions are executed by the processor, the steps of the measurement result reporting method according to any one of claims 1 to 20 are implemented.

39. A network-side device, comprising a processor and a memory, wherein the memory stores a program or instructions capable of running on the processor, and when the program or instructions are executed by the processor, the steps of the measurement result reporting method according to any one of claims 22 to 36 are implemented.

40. A readable storage medium, wherein the readable storage medium stores a program or instructions, and when the program or instructions are executed by a processor, the steps of the measurement result reporting method according to any one of claims 1 to 20 are implemented, or the steps of the measurement result reporting method according to any one of claims 22 to 36 are implemented.
